# EUROPÄISCHE PATENTSCHRIFT

(11) **EP 4 445 285 B1**
(45) Veröffentlichungstag und Bekanntmachung des Hinweises auf die Patenterteilung: **22.10.2025**
(21) Anmeldenummer: 22834840.5
(22) Anmeldetag: 08.12.2022
(51) Int. Cl.: G06F 21/77, H04W 12/37, H04W 92/08, H04W 12/40

(54) **SICHERES ELEMENT MIT ZUGRIFFSREGEL-ANWENDUNG ARA**
SECURE ELEMENT WITH ACCESS RULES APPLICATION
ÉLÉMENT SÉCURISÉ AVEC APPLICATION DE RÈGLES D'ACCÈS

(30) Priorität: 09.12.2021 DE 102021006083
(43) Veröffentlichungstag der Anmeldung: 16.10.2024
(73) Patentinhaber: Giesecke+Devrient Mobile Security Germany GmbH, 81677 München (DE)
(72) Erfinder: SCHNELLINGER, Michael, 84032 Landshut (DE)
(74) Vertreter: Giesecke+Devrient IP
(86) Internationale Anmeldenummer: PCT/EP2022/025556
(87) Internationale Veröffentlichungsnummer: WO 2023/104334

(56) Entgegenhaltungen:
- EP-A1- 2 827 274
- EP-A1- 2 890 171
- GLOBALPLATFORM: "GlobalPlatform Device Technology Secure Element Access Control Version 1.1", 30 September 2014 (2014-09-30), XP055539898, Retrieved from the Internet <URL:https://globalplatform.org/wp-content/uploads/2014/10/GPD_SE_Access_Control_v1.1.pdf> [retrieved on 20190109]

## Beschreibung

### Gebiet der Erfindung

Die Erfindung betrifft ein Secure Element, insbesondere ein Teilnehmeridentitätsmodul (Subscriber Identity Module SIM) zum Betrieb in einem mobilen Endgerät, und einer Zugriffsregel-Applikation, ARA-Applikation, durch welche der Zugriff des mobilen Endgeräts auf Applikationen in dem Secure Element geregelt ist.

Mobile (mobilfunkfähige) Endgeräte kommunizieren über Mobilfunknetze. Zu den klassischen mobilen Endgeräten zählen Smartphones und Mobiltelefone. Zu mobilen Endgeräten zählen weiter Automotive-Telematik-Geräte und Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Zur Nutzung eines mobilen Endgeräts in einem Mobilfunknetzwerk eines Netzbetreibers enthält das im mobilen Endgerät betriebene Teilnehmeridentitätsmodul ein oder mehrere Subskriptions-Profile oder kurz Profile. Das Profil bewerkstelligt die Konfiguration des Endgeräts und der Verbindung des Endgeräts im Mobilfunknetz. Das Profil umfasst Profildaten, der den Aufbau, Betrieb und Abbau einer Verbindung des Endgeräts im Mobilfunknetzwerk ermöglichen, beispielsweise einen kryptographischen Authentisierungs-Schlüssel Ki und eine International Mobile Subscriber Identity IMSI. Weiter kann jedes Profil Applikationen umfassen.

Das Endgerät selbst hat einen oder mehrere Endgerät-Chips zum Betrieb von Funktionen des Endgeräts. Aktuelle Smartphones haben beispielsweise typischerweise zumindest drei Endgeräte-Chips, nämlich einen Transceiver-IC, der die physische Funkkommunikation durchführt, zumindest einen Baseband-Prozessor (oder gleichbedeutend Modem), der Funktionen zur Datenübertragung über Funkkommunikation auf Protokollebene durchführt, und einen Application-Prozessor, auf welchem das Betriebssystem und Anwendungssoftware ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth.

Das Teilnehmeridentitätsmodul kann in unterschiedlichen Formfaktoren gestaltet sein, insbesondere Plug-In, Embedded, Integrated und Software. Teilnehmeridentitätsmodule vom Formfaktor Plug-In und Embedded sind auf einem dezidierten, eigenen Chip oder SoC (System-on-Chip) angeordnet. Beispiele für Plug-Ins sind SIM-Karte (SIM = Subscriber Identity Module) oder USIM-Karte (Universal SIM) oder UICC (Universal Integrated Circuit Card) und kontaktieren das Endgerät über einen Kartenleser. Alternativ kann der dezidierte Chip in ein Gehäuse integriert sein, das in das Endgerät festeinlötbar bzw. festeingelötet ist. Ein einlötbares/eingelötetes Teilnehmeridentitätsmodul wird mit dem Zusatz "embedded" versehen und als eUICC bezeichnet, wobei e für embedded steht und die weitere Bezeichnung vom entsprechend ausgestatteten Plug-In übernommen ist. Weitere mögliche Formfaktoren eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" versehen und z.B. als integrated UICC, iUICC. Weitere mögliche Formfaktoren eines Teilnehmeridentitätsmoduls sind reine Software-Module mit der Funktionalität eines Teilnehmeridentitätsmoduls, die in einen Endgeräte-Chip integriert sind.

Aktuelle Betriebssysteme für mobile Endgeräte, beispielsweise Android, erlauben Zugriffe auf das Teilnehmeridentitätsmodul (SIM-Zugriffe) auf Applikations-Ebene über verschiedene APIs (API = Application Programing Interface = Applikations-Programmier-Schnittstelle), beispielsweise die in [3] [OM API] beschriebene OpenMobile API oder die in [4] [Device API] beschriebene Device API. In [3] sind mehrere API-Klassen (Classes) definiert, unter anderem die SE-Service-API. Darüber hinaus gibt es die Telephony-API, welche von Google definiert wurde.

### Stand der Technik

Das Dokument [1] [SEAC] GlobalPlatform Device Technology, Secure Element Access Control, Version 1.1, Public Release, September 2014, Dokument-Referenz GPD_SPE_013, beschreibt Zugriffsregeln, durch welche der Zugriff eines mobilen Endgeräts auf Applikationen in einem Secure Element geregelt ist. Unter einem Secure Element wird in [1] eine fälschungssichere Komponente verstanden, die in einem Gerät (Device) verwendet wird, um Sicherheit, Vertrauenswürdigkeit und eine Multiapplikationsumgebung bereitzustellen. Der Formfaktor des Secure Element kann beispielsweise der eines UICC (Universal Integrated Circuit Card) oder eSE (embedded Secure Element) sein.

Die Zugriffsregeln aus [1] werden auch im Zusammenhang mit Teilnehmeridentitätsmodulen angewandt.

Dokument [1] definiert die im Secure Element implementierte Access Rule Application ARA.

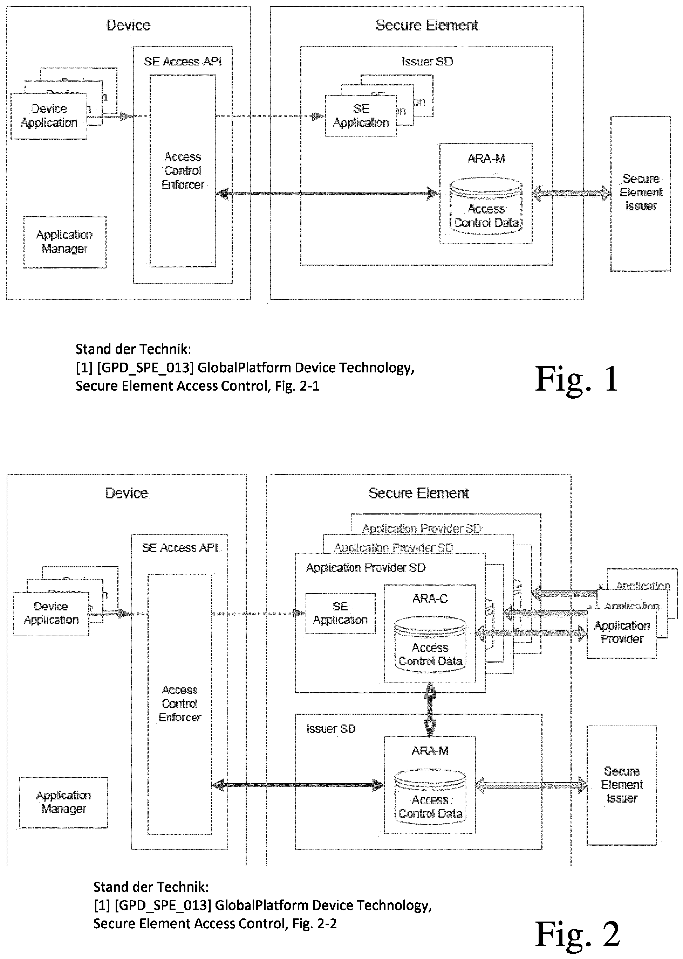

Fig. 1 zeigt die aus [1] übernommene Figur 2-1, die ein elementares Secure Element mit einer einzelnen Issuer Security Domain (Sicherheitsdomäne) SD und einer einzelnen Access Rule Application Master ARA-M darstellt. Die Access Rule Application Master ARA-M kontrolliert anhand von Zugriffsregeln, der Access Rules, den Zugriff des Geräts (Device) mittels des im Gerät implementierten Access Control Enforcers auf das Secure Element. Fig. 1 bzw. Figur 2-1 spiegelt eine typische UICC oder SIM-Karte mit einem festimplementierten Profil eines einzigen Netzbetreibers wieder.

Fig. 2 zeigt die ebenfalls aus [1] übernommene Figur 2-2, die ein Secure Element mit einer Issuer Security Domain (Sicherheitsdomäne) SD und mehreren Application Provider Security Domains darstellt. In der Issuer Security Domain und in jeder Application Provider Security Domain ist jeweils eine Access Rule Application ARA-M bzw. ARA-C enthaltenDie Access Rule Application (ARA-Applikation) Master ARA-M in der Issuer Security Domain (SGP.22: ISD-P) kontrolliert anhand von Zugriffsregeln, Access Rules, des Herausgebers des Secure Element den Zugriff des Geräts (Device) mittels des im Gerät implementierten Access Control Enforcers auf das Secure Element, genauer auf die Issuer Security Domain . Die jeweilige Access Rule Application (ARA-Applikation) Client ARA-C kontrolliert anhand von Zugriffsregeln, Access Rules, des jeweiligen Applikations-Providers den Zugriff des Device auf die jeweilige Application Provider Security Domain (SGP.22: AP-SD unter der ISD-P).

Das Dokument [1] sieht in Kapitel 5 vor, dass über Kommandos, die mittels Applikations-Fernverwaltung, Remote Application Management (RAM), bei dem Secure Element eingehen, Zugriffsregeln, Access Rules, verwalten werden können. Insbesondere können mittels der Fernverwaltung neue Zugriffsregeln in das Secure Element gespeichert, aus dem Secure Element gelöscht, sowie im Secure Element geändert und aktualisiert werden. Zur Kommunikation mit dem Secure Element schlägt [1] einen gesicherten Kommunikationskanal, secure channel, nach Vorgaben von Global Platform vor. Die Applikations-Fernverwaltung, Remote Application Management (RAM), geht davon aus, dass die Kommandos für die Zugriffsregeln von einem entfernten (REMOTE) Server an das Secure Element gesendet werden.

Die Nutzer von Consumer Endgeräten wie Smartphones mit einem Teilnehmeridentitätsmodul (eUICC) oder mobilfunkfähigen Tablets laden verbreitet Applikationen in ihre Endgerät, beispielsweise Apps aus App-Stores. Hierbei kann auch eine Applikation in ein Endgerät geladen werden, die Zugriff auf das Teilnehmeridentitätsmodul bekommen soll, aber keinen Zugriff bekommt, da die Zugriffsregeln (ARA Access Rules) der ARA-Applikation im Teilnehmeridentitätsmodul dies verbieten.

Aktuell sind die Zugriffsregeln für ISD-Ps und deren Profile (also im Modell von [1] Application Provider Security Domains) durch den Netzbetreiber (MNO) festgelegt, und können nur durch den Netzbetreiber durch Fernverwaltung OTA (Over-The-Air) verwaltet werden, insbesondere neu in das Teilnehmeridentitätsmodul gespeichert oder gelöscht oder geändert werden.

Nutzer ändern den Bestand an Apps aus App-Stores auf ihrem Endgerät teilweise sehr rasch und sehr häufig. Für den Nutzer wäre es daher wünschenswert, die Zugriffsregeln der ARA-Applikation im Teilnehmeridentitätsmodul selbst anpassen zu können, entsprechend den gerade im Endgerät enthaltenen Applikationen (insbesondere Apps aus App-Stores).

Auch für Secure Elements in anderen Anwendungsbereichen, beispielsweise Zahlungsverkehrskarten oder digitalen Zahlungsverkehrslösungen oder Identifikationsdokumenten, in denen eine ARA-Applikation verwendet wird, kann der Wunsch aufkommen, eine Anpassung von ARA-Zugriffsregeln durch den Nutzer zu ermöglichen.

Das Dokument [5] EP2890171A1 aus dem Stand der Technik offenbart ein Verfahren, um einem in einem mobilen Kommunikationsgerät vorgesehenen access control enforcer, mittels spezifischer Kommandos einen Zugriff auf Zugriffsregeln eines in einem Secure Element vorgesehenen ARA Master Applet und ARA-Client Applet zu ermöglichen.

Das Dokument [6] EP2827274A1 aus dem Stand der Technik offenbart ein Verfahren zum Durchsetzen einer Zugriffskontrolle eines Geräts auf ein in dem Gerät beherbergtes Secure Element, wobei das Secure Element, in Antwort auf eine Applikations-bezogene Anforderung des Geräts an das Secure Element, dem Gerät Zugriff auf diejenigen ARA-Zugriffsregeln gewährt, die in einer Security Domain gespeichert sind, welcher die Applikation angehört.

### Zusammenfassung der Erfindung

Der Erfindung liegt die Aufgabe zu Grunde, ein Secure Element mit einer ARA-Applikation zu schaffen, das eine flexible Anpassung der Zugriffsmöglichkeiten auf SE Applikationen im Secure Element ermöglicht.

Die Aufgabe wird gelöst durch ein Secure Element nach Anspruch 1. Vorteilhafte Ausgestaltungen der Erfindung sind in den abhängigen Ansprüchen angegeben.

Das erfindungsgemäße Secure Element nach Anspruch 1 umfasst eine darin implementierte SE Applikation oder ist eingerichtet eine SE Applikation darin zu implementieren, und umfasst weiter: - eine SE-Endgerät-Schnittstelle zu einem Endgerät, in Verbindung mit dem das Secure Element betrieben werden kann; - eine ARA-Applikation und ARA-Zugriffsregeln, durch welche Zugriffe von in dem Endgerät implementierten Applikationen über die SE-Endgerät-Schnittstelle auf in dem Secure Element implementierte oder implementierbare SE Applikationen geregelt sind. Das Secure Element ist gekennzeichnet durch:
- eine ARA-Nutzer-Schnittstelle, die dazu eingerichtet ist:
   ** Nutzer-Kommandos entgegenzunehmen, die durch einen Nutzer an einer, am Endgerät oder am Secure Element vorgesehenen, Nutzer-Schnittstelle eingegeben werden;
   ** entgegengenommene Nutzer-Kommandos an die ARA-Applikation im Secure Element weiter zu leiten; und
   ** die ARA-Applikation zu veranlassen, weitergeleitete Nutzer-Kommandos auf die ARA-Applikation anzuwenden.

Im Unterschied zu bisherigen Verwaltungsmöglichkeiten für die ARA-Applikation ist der Nutzer nicht darauf angewiesen, auf eine Verwaltungsaktion eines entfernten Servers zu warten, und diese Verwaltungsaktion ggf. bei dem entfernten Server zu beantragen, sondern kann über die ARA-Nutzer-Schnittstelle lokal an seinem Endgerät selbst eine Verwaltungsaktion veranlassen. Dadurch kann der Nutzer, wenn auf seinem Endgerät geänderte Zugriffserfordernisse auf SE Applikationen des Secure Element entstehen, beispielsweise durch neue auf das Endgerät heruntergeladene Applikationen, sofort lokal selbst reagieren und die ARA-Applikation entsprechend anpassen.

Daher ist gemäß Anspruch 1 ein Secure Element geschaffen, das eine flexible Anpassung der Zugriffsmöglichkeiten auf SE Applikationen im Secure Element ermöglicht.

Im Zusammenhang mit der Erfindung wird der Begriff Endgerät so verstanden, dass darunter auch ein Gerät im Sinn des Dokuments [1] [SEAC] fällt.

Die ARA-Nutzer-Schnittstelle wird insbesondere als Programmcode-Schnittstelle zwischen Programmcodes verstanden, die es ermöglicht Nutzer-Kommandos der ARA-Applikation zuzuführen. Im Unterschied dazu ist die Nutzer-Schnittstelle dazu vorgesehen, Nutzer-Kommandos vom Nutzer entgegenzunehmen. Eine typische Nutzer-Schnittstelle sind die Bedienelement eines Smartphone oder Tablet PC, wie Touch-Display, Tasten oder/und Spracheingabeschnittstellen (Mikrofon).

Wahlweise sind die Nutzer-Kommandos darauf gerichtet, ARA-Zugriffsregeln zu verwalten, und das Anwenden des Nutzer-Kommandos auf die ARA-Applikation umfasst das den Nutzer-Kommandos entsprechende Verwalten der ARA-Zugriffsregeln.

Als das Verwalten ist bzw. sind wahlweise eine oder mehrere der folgenden Verwaltungsmaßnahmen vorgesehen:
- Erzeugen einer neuen ARA-Zugriffsregel;
- Speichern einer neuen ARA-Zugriffsregel im Secure Element;
- Löschen einer im Secure Element gespeicherten ARA-Zugriffsregel;
- Ändern, insbesondere Aktualisieren auf eine neuere Version oder beliebiges anderweitiges Ändern, einer im Secure Element gespeicherten ARA-Zugriffsregel.

Wahlweise umfasst das Verwalten ein Erzeugen oder Anpassen und Speichern einer ARA-Zugriffsregel im Secure Element für eine Applikation, die neu in das Endgerät geladen worden ist, und für die im Secure Element noch keine oder keine passende ARA-Zugriffsregel vorhanden ist. Die Applikation kann dabei insbesondere aus einem App-Store in das Endgerät heruntergeladen werden.

Die Nutzer-Schnittstelle kann wahlweise im Endgerät vorgesehen sein.

Wahlweise ist das Secure Element weiter dazu eingerichtet, die Nutzer-Kommandos von einer zwischen die Nutzer-Schnittstelle und die ARA-Nutzer-Schnittstelle gekoppelten oder koppelbaren, in dem Endgerät implementierten ARA-Konfigurations-Applikation entgegenzunehmen.

Bei dieser Ausführungsform werden im Endgerät durch die ARA-Konfigurations-Applikation die Nutzer-Kommandos an die ARA-Nutzer-Schnittstelle des Secure Element weitergeleitet, und bedarfsweise in durch die ARA-Nutzer-Schnittstelle interpretierbare (verständliche) Anweisungen umgewandelt. Konkret kann durch das Nutzer-Kommando oder die Anweisung die ARA-Nutzer-Schnittstelle angewiesen werden, eine neue ARA-Zugriffsregel zu erzeugen und in das Secure Element zu speichern, oder eine vorhandene ARA-Zugriffsregel zu ändern.

Wahlweise sind die Nutzer-Schnittstelle und die ARA-Konfigurations-Applikation beide im Endgerät implementiert, und die ARA-Nutzer-Schnittstelle im Secure Element übernimmt die Nutzer-Kommandos von der ARA-Konfigurations-Applikation im Endgerät.

Insbesondere Teilnehmeridentitätsmodule für mobile Endgeräte haben häufig keine eigene Nutzer-Schnittstelle, sondern nehmen Nutzer-Kommandos und andere Nutzer-Eingaben über das mobile Endgerät entgegen, dabei wahlweise über SIM Toolkit-Kommandos oder Card-Toolkit-Kommandos. Alternativ gibt es allerdings auch NFC-SIM-Karten als Teilnehmeridentitätsmodule mit eigener kontaktloser Nutzer-Schnittstelle, auf die ein Nutzer unter Umgehung des mobilen Endgeräts, in dem das Teilnehmeridentitätsmodul betrieben wird, zugreifen kann. Eine entsprechende Ausführungsform ist weiter unten beschrieben.

Insbesondere kann die ARA-Konfigurations-Applikation bei einem mobilen Endgerät als App gestaltet sein, die beispielsweise aus einem App-Store in das Endgerät heruntergeladen werden kann. Entsprechend kann die ARA-Konfigurations-Applikation wahlweise wie eine beliebige App aus einem App-Store durch einen Nutzer bedienbar sein. Die zusätzliche ARA-Konfigurations-Applikation ermöglicht eine Trennung der technischen Lösung in eine maschinennahe ARA-Nutzer-Schnittstelle einerseits und eine intuitiv bedienbare ARA-Konfigurations-Applikation andererseits. Diese Trennung hat den Vorteil, den Bedien-Komfort für den Nutzer zu erhöhen. Weitere Vorteile, die mit einer ARA-Konfigurations-Applikation erzielt werden können, sind weiter unten beschrieben.

Die Nutzer-Schnittstelle kann wahlweise im Secure Element vorgesehen sein, und derart dass sie ein Nutzer direkt, unter Umgehung eines Endgeräts mit oder in dem das Secure Element betrieben wird, kontaktieren kann, beispielsweise als NFC-Schnittstelle des Secure Element.

Wahlweise umfasst das Secure Element weiter eine zwischen die Nutzer-Schnittstelle und die ARA-Nutzer-Schnittstelle gekoppelte oder koppelbare ARA-Konfigurations-Applikation, die dazu eingerichtet ist, Nutzer-Kommandos an die ARA-Applikation zu leiten. Wahlweise sind hierbei die ARA-Nutzer-Schnittstelle und die ARA-Konfigurations-Applikation im Secure Element vorgesehen. Insbesondere ist die Nutzer-Schnittstelle, wenn sie im Secure Element vorgesehen ist, wahlweise eine Kontaktlosschnittstelle wie eine NFC-Schnittstelle. Als ARA-Konfigurations-Applikation im Secure Element kann wahlweise eine eigens in das Secure Element geladene Applikation genutzt werden, oder eine Applikation im Endgerät / Device, welche die Telephony API oder die SE-Service-API verwendet um dadurch eine Konfiguration im ARA-M oder ARA-C vorzunehmen.

Nutzer-Kommandos, die über mehrere Applikationen hinweg transportiert werden, können wahlweise durch an dem Transport beteiligte Applikationen (z.B. durch die ARA-Konfigurations-Applikation) bearbeitet und/oder verändert werden, oder/und mit Zusätzen wie Hashwerten, Signaturen und dergleichen versehen werden.

Wahlweise umfasst das Secure Element weiter einen Timer, der dazu eingerichtet ist, zu bewirken, dass an der ARA-Nutzer-Schnittstelle entgegengenommene Nutzer-Kommandos nur während eines begrenzten Zeitintervalls auf die ARA-Applikation angewendet werden, und nach Ablauf des Zeitintervalls nicht mehr auf die ARA-Applikation angewendet werden.

Wahlweise wird der Timer durch ein Secure Element Kommando, beispielsweise ein SIM Toolkit Kommando oder Card Toolkit Kommando, erzeugt und gestartet, wobei das Zeitintervall festgesetzt wird, während dessen der Timer bis zu seinem Ablauf läuft. Bei dieser Ausführungsform werden an der ARA-Nutzer-Schnittstelle entgegengenommene Kommandos ab dem Erzeugen des Timers und innerhalb des Zeitintervalls auf die ARA-Applikation angewendet, und außerhalb des Zeitintervalls, nach Ablauf des Timers, nicht angewendet oder/und nicht weitergeleitet. Innerhalb des Zeitintervalls kann beispielsweise für eine neu in das Endgerät geladene Applikation eine ARA-Zugriffsregel erzeugt und in das Secure Element gespeichert werden. Geht nach Ablauf des Timers ein Kommando zur Erzeugung einer neuen ARA-Zugriffsregel ein, so wird keine ARA-Zugriffsregel erzeugt. Dazu muss ein neuer Timer erzeugt und gestartet werden.

Die ARA-Nutzer-Schnittstelle kann wahlweise als eigenständige Applikation gestaltet sein. Wahlweise kann die ARA-Nutzer-Schnittstelle, insbesondere falls sie im Endgerät vorgesehen ist, in die ARA-Applikation integriert sein, beispielsweise als zusätzliches funktionelles Programmcode-Modul.

Die ARA-Konfigurations-Applikation kann wahlweise als eigenständige Applikation gestaltet sein. Wahlweise kann die ARA-Konfigurations-Applikation, insbesondere falls sie im Endgerät vorgesehen ist, in die ARA-Applikation integriert sein, beispielsweise als zusätzliches funktionelles Programmcode-Modul.

Das Secure Element kann wahlweise als Teilnehmeridentitätsmodul gestaltet sein, zum Betrieb in Verbindung mit (als Endgerät) einem mobilen Endgerät, wobei als SE Applikation eine oder mehrere der folgenden vorgesehen ist bzw. sind:
- ein Profil (Subskriptions-Profil, insbesondere i.S.v. SGP.22);
- eine mit einem Profil assoziierte Applikation;
- eine unabhängig von einem Profil in dem Secure Element implementierte oder implementierbare Applikation.

Als Applikationen, die mit einem Profil assoziiert sind oder von einem Profil unabhängig sind, können Applikationen auf dem Gebiet des Mobilfunks vorgesehen sein, oder Applikationen außerhalb des Gebiets des Mobilfunks wie beispielsweise Zahlungsapplikationen oder Identitätsapplikationen.

Die Erfindung umfasst eine Station gemäß Anspruch 8. Die Station umfasst ein Secure Element und ein Endgerät, insbesondere ein mobiles Endgerät.

Das Endgerät umfasst wahlweise die Nutzer-Schnittstelle, an der die Nutzer-Kommandos eingegeben werden, und die ARA-Konfigurations-Applikation.

Ein erfindungsgemäßes Verfahren gemäß Anspruch 10 zur Verwaltung eines Secure Element zeichnet sich aus durch die Schritte:
- an einer ARA-Nutzer-Schnittstelle:
   ** Entgegennehmen eines Nutzer-Kommandos, das durch einen Nutzer an einer Nutzer-Schnittstelle des Endgeräts oder des Secure Element eingegeben wird;
   ** Weiterleiten des entgegengenommenen Nutzer-Kommandos an die ARA-Applikation; und
   ** Veranlassen der ARA-Applikation, das weitergeleitete Nutzer-Kommando auf die ARA-Applikation anzuwenden;
   ** durch die ARA-Applikation, in Reaktion auf das Veranlassen, Anwenden des Nutzer-Kommandos.

Wahlweise ist das Nutzer-Kommando darauf gerichtet, ARA-Zugriffsregeln zu verwalten, wobei das Anwenden des Nutzer-Kommandos das Verwalten der ARA-Zugriffsregeln umfasst, wobei als das Verwalten eine oder mehrere der folgenden Verwaltungsmaßnahmen vorgesehen ist bzw. sind:
- Erzeugen einer neuen ARA-Zugriffsregel;
- Speichern einer neuen ARA-Zugriffsregel im Secure Element;
- Löschen einer im Secure Element gespeicherten ARA-Zugriffsregel;
- Ändern einer im Secure Element gespeicherten ARA-Zugriffsregel.

Ein erfindungsgemäßes Verfahren gemäß Anspruch 12 zum Verwalten einer Station umfasst
- Herunterladen einer Target-Applikation in das Endgerät;
- erfindungsgemäßes Verwalten eines Secure Element einschließlich Verwalten von ARA-Zugriffsregeln;
- wobei das Verwalten der ARA-Zugriffsregeln umfasst:
   ** ein Erzeugen einer neuen ARA-Zugriffsregel für die Target-Applikation, durch welche insbesondere der Target-Applikation Zugriff auf SE Applikationen des Secure Element gemäß der erzeugten neuen ARA-Zugriffsregel erlaubt wird; und
   ** ein Speichern der erzeugten neuen ARA-Zugriffsregel im Secure Element.

Wahlweise erfolgt das Verwalten der ARA-Zugriffsregeln unter Einsatz einer ARA-Konfigurations-Applikation, wie weiter oben beschrieben.

Wahlweise sieht die ARA-Konfigurations-Applikation die Möglichkeit vor, Target-Applikationen in der ARA-Konfigurations-Applikation zu registrieren. Einer registrierten Target-Applikation können wahlweise festgelegte oder festlegbare Berechtigungen eingeräumt werden. Beispielsweise erhalten nur Target-Applikationen, die bei der ARA-Konfigurations-Applikation registriert sind, die Berechtigung, eine ARA-Zugriffsregel zu bekommen, die der Target-Applikation Zugriff auf SE Applikationen des Secure Element ermöglicht.

Wahlweise ist bei der Registrierung einer Target-Applikationen in der ARA-Konfigurations-Applikation eine Authentisierung der Target-Applikationen gegenüber der ARA-Konfigurations-Applikation erforderlich.

Die Registrierung der Target-Applikation kann beispielsweise anhand eines Hash-Werts über Bestandteile der Target-Applikation erfolgen, oder anhand eines Applet Identifiers wie z.B. eines AID der Target-Applikation.

Ein wesentlicher Vorteil der Erfindung ist, dass der Nutzer über die lokale ARA-Nutzer-Schnittstelle aktiv auf die ARA-Zugriffsregeln Einfluss nehmen kann, insbesondere lokal an seinem Endgerät. Eine zusätzliche ARA-Konfigurations-Applikation kann es erlauben weitere Funktionalitäten zu verwirklichen, und den Bedien-Komfort für den Nutzer zu erhöhen. Als Erweiterung kann die ARA-Nutzer-Schnittstelle die Möglichkeit vorsehen, eine Verwaltung von ARA-Zugriffsregeln über Fernverwaltung OTA (Over-The-Air) zu initiieren. Falls im Dateisystem des Secure Element Access Rule Files ARF gemäß [1] SEAC] verwendet werden, kann die Fernverwaltung insbesondere in der Form von Remote File Management erfolgen.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: ein elementares Secure Element mit einer einzelnen Issuer Security Domain (Sicherheitsdomäne) SD und einer einzelnen Access Rule Application Master ARA-M, gemäß dem Stand der Technik [1], Figur 2-1;
- Fig. 2: ein Secure Element mit einer Issuer Security Domain (Sicherheitsdomäne) SD mit einer Access Rule Application ARA-M, und mehreren Application Provider Security Domains mit jeweils eine Access Rule Application ARA-C, gemäß dem Stand der Technik [1], Figur 2-2;
- Fig. 3: Anwendungsmöglichkeiten der Erfindung auf typische Implementierungen von ARA-Applikationen gemäß [1] in einem eUICC gemäß [2];
- Fig. 4: eine Detailansicht eines Endgeräts und eines Secure Element mit einer Security Domain (Sicherheitsdomäne) SD mit einer ARA-Applikation, gemäß mehreren Ausführungsformen der Erfindung;
- Fig. 5: ein Ablaufdiagramm zur Veranschaulichung eines Verfahrens zur Verwaltung eines Secure Element, umfassend Verwalten von ARA-Zugriffsregeln in Reaktion auf ein Nutzer-Kommando, gemäß Ausführungsformen der Erfindung;
- Fig. 6: ein Ablaufdiagramm zur Veranschaulichung eines Verfahrens zur Verwaltung eines Secure Element, umfassend Verwalten von ARA-Zugriffsregeln in Reaktion auf ein Nutzer-Kommando unter Verwendung eine ARA-Konfigurations-Applikation, gemäß Ausführungsformen der Erfindung.

### Detaillierte Beschreibung von Ausführungsbeispielen

Fig. 1 und 2 zeigen zwei Konfigurationen von ARA-Applikationen aus dem Dokument [1] aus dem Stand der Technik, die zur Anwendung der Erfindung geeignet sind. Die weiteren in [1] gezeigten Konfigurationen von ARA-Applikationen sind ebenfalls zur Anwendung der Erfindung geeignet.

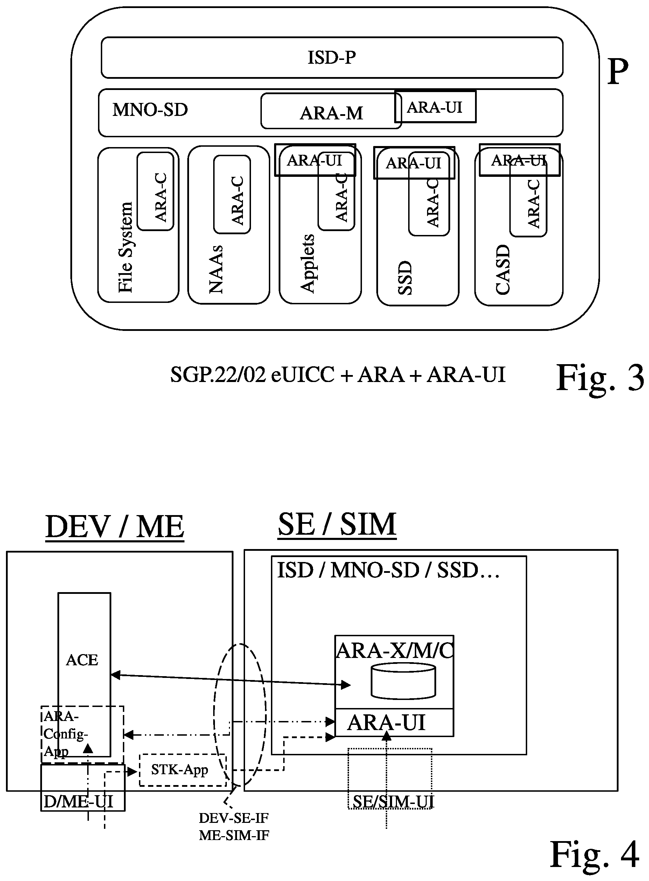

Fig. 3 zeigt Anwendungsmöglichkeiten der Erfindung auf typische Implementierungen von ARA-Applikationen gemäß [1] in (als Secure Element) einem eUICC gemäß [2]. Fig. 3 zeigt genauer ein einzelnes Profil P einer eUICC, angelehnt an Figur 3 aus [2], SGP.22, ergänzt um eine in der Netzbetreiber-Sicherheitsdomäne MNO-SD implementierte ARA-Applikation Master ARA-M, und in den Unter-Sicherheitsdomänen angeordneten ARA-Applikationen Client ARA-C. Gemäß Ausführungsformen der Erfindung ist in der Netzbetreiber-Sicherheitsdomäne MNO-SD eine ARA-Nutzer-Schnittstelle ARA-UI implementiert. Gemäß Ausführungsformen der Erfindung ist in der Applet-Sicherheitsdomäne Applet eine ARA-Nutzer-Schnittstelle ARA-UI implementiert. Gemäß Ausführungsformen der Erfindung ist in der SSD-Sicherheitsdomäne SSD eine ARA-Nutzer-Schnittstelle ARA-UI implementiert. Gemäß Ausführungsformen der Erfindung ist in der CASD (Controlling Authority Security Domain) eine ARA-Nutzer-Schnittstelle ARA-UI implementiert. In den weiteren untergeordneten oder anderen Sicherheitsdomänen, wie FileSystem (Dateisystem), NAAs (Net Access Applications - Netzzugangsapplikationen), können gemäß Ausführungsformen der Erfindung ebenfalls ARA-Nutzer-Schnittstelle ARA-UI implementiert sein.

Fig. 4 zeigt eine Detailansicht eines Endgeräts DEV/ME und eines Secure Element SE/SIM mit einer Security Domain (Sicherheitsdomäne) SD mit einer ARA-Applikation, gemäß mehreren Ausführungsformen der Erfindung. Das Endgerät DEV/ME enthält einen Access Control Enforcer ACE gemäß [1] [SEAC]. Das Secure Element SE/SIM enthält eine ARA-Applikation ARA-X, die je nach Art der Issuer Security Domain ISD eine ARA-M oder ARA-C oder ARA-D Applikation gemäß [1] [SEAC] sein kann. Erfindungsgemäß enthält das Secure Element eine ARA-Nutzer-Applikation ARA-UI. Zwischen dem Endgerät DEV/ME und dem Secure Element SE/SIM ist eine Schnittstelle DEV-SE-IF bzw. ME-SIM-IF zur Kommunikation zwischen dem Endgerät DEV/ME und dem Secure Element SE/SIM vorgesehen.

Das Endgerät DEV/ME weist eine Nutzer-Schnittstelle UI (insbesondere D-UI oder ME-UI) auf, über die ein Nutzer Eingaben vornehmen kann. Die Nutzer-Schnittstelle UI kann beispielsweise ein Touch-Display sein, oder eine Tastatur oder ein oder mehrere Tasten, oder eine Kombination aus Touch-Display, Tastatur und/oder ein oder mehreren Tasten.

Gemäß manchen Ausführungsformen werden Nutzer-Eingaben an der Nutzer-Schnittstelle UI über eine STK-Applikation (STK = SIM Toolkit) oder CTK-Applikation (CTK = Card Toolkit) des Endgeräts DEV/ME an das Secure Element SE/SIM weitergeleitet, und hierbei direkt an die ARA-Nutzer-Applikation ARA-UI weitergeleitet.

Gemäß manchen Ausführungsformen enthält das Endgerät DEV/ME weiter eine ARA-Konfigurations-Applikation ARA-Config-App. Bei diesen Ausführungsformen werden Nutzer-Eingaben an der Nutzerschnittstelle UI beispielsweise an die ARA-Konfigurations-Applikation ARA-Config-App weitergeleitet. Die ARA-Konfigurations-Applikation ARA-Config-App stellt die Nutzer-Eingaben der ARA-Applikation ARA-X im Secure Element SE/SIM zur Verfügung, und wirkt hierbei mit dem Access Control Enforcer ACE des Endgeräts DEV/ME zusammen.

Gemäß manchen Ausführungsformen ist in Fig. 4 ein beliebiges Endgerät DEV mit einem beliebigen Secure Element SE dargestellt. In der Issuer Security Domain ISD ist eine an der Art der ISD entsprechende ARA-Applikation ARA-X vorgesehen.

Gemäß manchen Ausführungsformen ist in Fig. 4 ein mobiles Endgerät ME im Sinn von [2] [SGP.22] dargestellt, und ein Teilnehmeridentitätsmodul oder eUICC SIM im Sinn von [2] [SGP.22]. Bei diesen Ausführungsformen ist in dem Secure Element als Sicherheitsdomäne SD eine MNO-SD vorgesehen, in der eine ARA-Applikation Master ARA-M gemäß [1] vorgesehen ist. Gemäß manchen Ausführungsformen ist in dem Secure Element als Sicherheitsdomäne SD eine Unterdomäne SSD (Supplementary Security Domain) eines Profils P vorgesehen, wobei in der SSD eine ARA-Applikation Client ARA-C gemäß [1] vorgesehen ist.

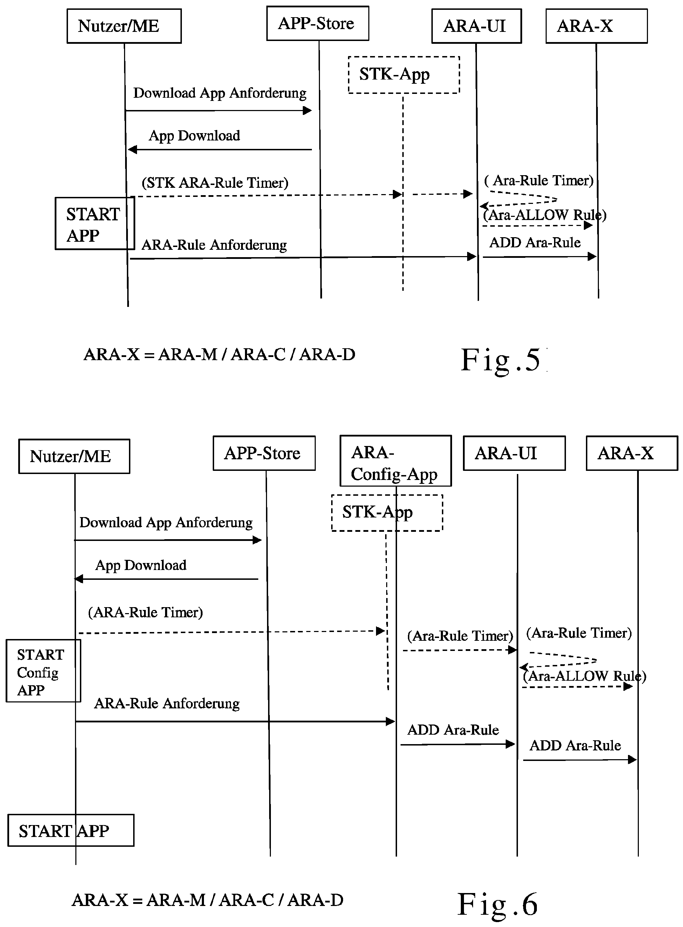

Fig. 5 zeigt ein Ablaufdiagramm zur Veranschaulichung eines Verfahrens zur Verwaltung eines Secure Element SE/SIM, umfassend Verwalten von ARA-Zugriffsregeln in Reaktion auf ein Nutzer-Kommando, gemäß Ausführungsformen der Erfindung. Das Verfahren wird anhand eines Endgeräts, das ein mobiles Endgerät ME in Form eines Smartphone ist, beispielhaft dargestellt. Im Endgerät ME ist eine Sim-Toolkit-Applikation STK-App implementiert. Das Secure Element SE/SIM ist als Teilnehmeridentitätsmodul SIM (eUICC) gestaltet. Im Secure Element SE/SIM sind eine ARA-Applikation ARA-X und ARA-Zugriffsregeln für die ARA-Applikation ARA-X implementiert. Im Secure Element SE/SIM ist weiter eine ARA-Nutzer-Schnittstelle ARA-UI implementiert.

Gemäß Fig. 5 besucht der Nutzer mittels des Touch-Display und ggf. Tasten seines Smartphone, als Nutzer-Schnittstelle UI des Endgeräts ME, einen App-Store und sendet an den App-Store eine Anforderung, eine bestimmte App in das Endgerät ME herunterzuladen, im weiteren als Target-App bezeichnet. Die Target-App wird aus dem App-Store in das Endgerät ME heruntergeladen. Die Target-App würde Zugriff auf Applets (SE Applikationen) des Secure Element SE des Endgeräts ME benötigen, hat aber diesen Zugriff nicht, da die neu heruntergeladene Target-App nicht in den ARA-Zugriffsregeln (Access Rules) der ARA-Applikation (Access Rule Application) eingetragen ist.

Gemäß manchen Ausführungsformen der Erfindung lässt die ARA-Applikation keine direkte Bearbeitung von ARA-Zugriffsregeln durch den Nutzer zu, sondern erfordert, dass der Nutzer die ARA-Applikation zuerst zur Bearbeitung freischaltet.

Gemäß Ausführungsformen der Erfindung lässt die ARA-Applikation es zu, dass der Nutzer durch ein SIM-Toolkit-Kommando, oder im Fall eines allgemeinen Secure Element Card-Toolkit-Kommandos, die ARA-Applikation zur Bearbeitung freischaltet. Der Nutzer sendet beispielsweise über die Nutzer-Schnittstelle UI des Endgeräts ein Sim-Toolkit-Kommando Timer(Zeitangabe) an die ARA-Nutzer-Schnittstelle ARA-Ul. Durch das Sim-Toolkit-Kommando Timer(Zeitangabe) wird die ARA-Nutzer-Schnittstelle ARA-UI veranlasst, eine ARA-Zugriffsregel ARA-ALLOW zu erzeugen, die eine Bearbeitung von ARA-Zugriffsregeln während eines durch "Zeitangabe" gegebenen Zeitintervalls erlaubt. "Zeitangabe" kann beispielsweise eine Zeitdauer von 1 bis 10 Minuten betragen, beispielsweise fünf Minuten. Die ARA-Nutzer-Schnittstelle ARA-UI sendet die ARA-Zugriffsregel ARA-ALLOW an die ARA-Applikation ARA-X. Das Verfahren kann jedoch auch ohne den Timer ablaufen (ohne die gestrichelten Pfeile in der Figur).

Der Nutzer startet spätestens nun die heruntergeladene Target-App. Die Target-App oder der Nutzer sendet eine Anforderung zur Verwaltung der ARA-Zugriffsregeln an die ARA-Nutzer-Schnittstelle. In der Anforderung wird gefordert, der Target-App Zugriff auf SE Applikationen (wahlweise alle oder nur bestimmte SE Applikationen) des Secure Element SE zu gewähren. Die ARA-Nutzer-Schnittstelle ARA-UI erzeugt eine ARA-Zugriffsregel, die der Target-App den angeforderten Zugriff auf das Secure Element gewährt und sendet die ARA-Zugriffsregel an die ARA-Applikation ARA-X. Die ARA-Applikation ARA-X trägt die von der ARA-Nutzer-Schnittstelle ARA-UI gesendete neu erzeugte ARA-Zugriffsregel in die ARA-Zugriffsregeln ein. Nachfolgend hat die Target-App Zugriff auf das Secure Element SE, so wie in der neuen ARA-Zugriffsregel festgelegt.

Der mit dem Nutzer-Kommando angeforderte und in der ARA-Zugriffsregel festgesetzte Zugriff auf SE Applikationen des Secure Element SE kann wahlweise alle SE Applikationen oder nur bestimmte spezifizierte SE Applikationen umfassen.

Fig. 6 zeigt ein Ablaufdiagramm zur Veranschaulichung eines Verfahrens zur Verwaltung eines Secure Element SE, umfassend Verwalten von ARA-Zugriffsregeln in Reaktion auf ein Nutzer-Kommando unter Verwendung eine ARA-Konfigurations-Applikation ARA-Config-App, gemäß Ausführungsformen der Erfindung.

Im Vergleich zum Verfahren aus Fig. 5 ist beim Verfahren aus Fig. 6 im Endgerät ME zusätzlich eine ARA-Konfigurations-Applikation ARA-Config-App vorgesehen. Die Abläufe bis zum Download der Target-App erfolgen beispielsweise wie beim Beispiel aus Fig. 5.

Der optionale Timer kann wahlweise wie beim Verfahren gemäß Fig. 5 mittels der SIM-Toolkit-Applikation STK-App bzw. Card-Toolkit-Applikation CTK-App gesetzt werden, wie anhand Fig. 5 beschrieben, oder alternativ durch die ARA-Konfigurations-Applikation ARA-Config-App gesetzt werden, ansonsten analog zum anhand Fig. 5 beschriebenen Timer. Das Verfahren kann jedoch auch ohne den Timer ablaufen (ohne die gestrichelten Pfeile in der Figur).

Nach dem Download der Target-App wird die ARA-Konfigurations-Applikation ARA-Config-App auf dem Endgerät ME gestartet, beispielsweise durch den Nutzer durch Eingabe an der Nutzer-Schnittstelle Ul. Wahlweise wird die ARA-Konfigurations-Applikation ARA-Config-App als auswählbare App (z.B. als Icon oder Widget) auf einem Display des Endgeräts ME angezeigt, so dass der Nutzer sie wie jede App auf dem Endgerät ME starten kann. Der Nutzer fordert mittels der ARA-Konfigurations-Applikation ARA-Config-App des Endgeräts ME bei der ARA-Nutzer-Schnittstelle ARA-UI des Secure Element SE an, dass für die neu heruntergeladene Target-App eine ARA-Zugriffsregel angelegt wird. Die Target-App muss zu diesem Zeitpunkt noch nicht zwingend, kann aber schon, gestartet worden sein. Die ARA-Nutzer-Schnittstelle ARA-UI erzeugt eine ARA-Zugriffsregel, die der Target-App den angeforderten Zugriff auf das Secure Element SE gewährt und sendet die ARA-Zugriffsregel an die ARA-Applikation ARA-X. Die ARA-Applikation ARA-X trägt die von der ARA-Nutzer-Schnittstelle ARA-UI gesendete neu erzeugte ARA-Zugriffsregel in die ARA-Zugriffsregeln ein. Nachfolgend hat die Target-App Zugriff auf das Secure Element SE, so wie in der neuen ARA-Zugriffsregel festgelegt.

Spätestens nun wird die Target-App gestartet. Gemäß einer anderen Ausführungsform wird nach dem Download der Target-App die Target-App gestartet, und bei Bedarf durch die Target-App die ARA-Konfigurations-App ARA-Config-App gestartet, und nachfolgend das Verfahren durchgeführt wie oben anhand Fig. 6 beschrieben, um der Target-App Zugriff auf die gewünschten SE Applikationen des Secure Element SE einzuräumen.

### Zitierte Dokumente

[1] SEAC] GlobalPlatform Device Technology, Secure Element Access Control, Version 1.1, Public Release, September 2014, Dokument-Referenz GPD_SPE_013;
[2] [SGP.22] GSMA SGP.22 RSP Technical Specification, Version 2.2.2, 05 June 2020;
[3] [OM API] GlobalPlatform Technology, Open Mobile API Specification, Version 3.3, Public Release July 2018, Document Reference: GPD_SPE_075;
[4] [Device API] GlobalPlatform Device Technology, Device API Access Control, Version 1.0, Public Release November 2017, Document Reference: GPD_SPE_068;
[5] EP 2 890 171 A1;
[6] EP 2 827 274 A1.

## Patentansprüche

1. Secure Element (SE/SIM) umfassend eine darin implementierte SE Applikation oder eingerichtet eine SE Applikation darin zu implementieren, und weiter umfassend:
- eine SE-Endgerät-Schnittstelle zu einem Endgerät (DEV/ME), in Verbindung mit dem das Secure Element (SE/SIM) betrieben werden kann;
- eine ARA-Applikation (ARA-X/M/C) und ARA-Zugriffsregeln, durch welche Zugriffe von in dem Endgerät (DEV/ME) implementierten Applikationen über die SE-Endgerät-Schnittstelle auf in dem Secure Element (SE/SIM) implementierte oder implementierbare SE Applikationen geregelt sind;
**gekennzeichnet durch:**
- eine ARA-Nutzer-Schnittstelle (ARA-UI), die dazu eingerichtet ist:
** Nutzer-Kommandos entgegenzunehmen, die durch einen Nutzer an einer, am Endgerät (DEV/ME) oder am Secure Element (SE/SIM) vorgesehenen, Nutzer-Schnittstelle (D/ME-UI; SE/SIM-UI) eingegeben werden;
** entgegengenommene Nutzer-Kommandos an die ARA-Applikation (ARA-X/M/C) weiter zu leiten; und
** die ARA-Applikation (ARA-X/M/C) zu veranlassen, weitergeleitete Nutzer-Kommandos auf die ARA-Applikation (ARA-X/M/C) anzuwenden.

2. Secure Element (SE/SIM) nach Anspruch 1, wobei die Nutzer-Kommandos darauf gerichtet sind, ARA-Zugriffsregeln zu verwalten, und das Anwenden des Nutzer-Kommandos auf die ARA-Applikation (ARA-X/M/C) das Verwalten der ARA-Zugriffsregeln umfasst, wobei als das Verwalten eine oder mehrere der folgenden Verwaltungsmaßnahmen vorgesehen ist bzw. sind:
- Erzeugen einer neuen ARA-Zugriffsregel;
- Speichern einer neuen ARA-Zugriffsregel im Secure Element (SE/SIM);
- Löschen einer im Secure Element (SE/SIM) gespeicherten ARA-Zugriffsregel;
- Ändern einer im Secure Element (SE/SIM) gespeicherten ARA-Zugriffsregel.

3. Secure Element (SE/SIM) nach Anspruch 1 oder 2, weiter dazu eingerichtet:
- die Nutzer-Kommandos von einer zwischen die Nutzer-Schnittstelle (D/ME-UI) und die ARA-Nutzer-Schnittstelle (ARA-UI) gekoppelten oder koppelbaren, in dem Endgerät (DEV/ME) implementierten ARA-Konfigurations-Applikation (ARA-Config-App) entgegenzunehmen.

4. Secure Element nach Anspruch 1 oder 2, weiter umfassend:
- eine zwischen die Nutzer-Schnittstelle (SE/SIM-UI) und die ARA-Nutzer-Schnittstelle (ARA-UI) gekoppelte oder koppelbare ARA-Konfigurations-Applikation (ARA-Config-App), die dazu eingerichtet ist, Nutzer-Kommandos an die ARA-Applikation (ARA-X/M/C) zu leiten.

5. Secure Element (SE/SIM) nach einem der Ansprüche 1 bis 4, weiter umfassend
- einen Timer, der dazu eingerichtet ist, zu bewirken, dass an der ARA-Nutzer-Schnittstelle (ARA-UI) entgegengenommene Nutzer-Kommandos nur während eines begrenzten Zeitintervalls auf die ARA-Applikation (ARA-X/M/C) angewendet werden, und nach Ablauf des Zeitintervalls nicht mehr auf die ARA-Applikation (ARA-X/M/C) angewendet werden.

6. Secure Element (SE/SIM) nach Anspruch 5, wobei der Timer dazu eingerichtet ist, durch ein in das Secure Element (SE/SIM) eingegebenes elementares Secure Element Kommando gestartet zu werden, insbesondere durch ein Card Toolkit Kommando oder SIM Toolkit Kommando.

7. Secure Element (SE/SIM) nach einem der Ansprüche 1 bis 6, gestaltet als Teilnehmeridentitätsmodul (SIM) zum Betrieb in Verbindung mit, als Endgerät (DEV/ME), einem mobilen Endgerät (ME), wobei als SE Applikation eine oder mehrere der folgenden vorgesehen ist bzw. sind:
- ein Profil;
- eine mit einem Profil assoziierte Applikation;
- eine unabhängig von einem Profil in dem Secure Element implementierte oder implementierbare Applikation.

8. Station umfassend ein Secure Element (SE/SIM) nach einem der Ansprüche 1 bis 7 und ein Endgerät (DEV/ME), insbesondere ein mobiles Endgerät (ME).

9. Station nach Anspruch 8, in Verbindung mit Anspruch 4, wobei das Endgerät (DEV/ME) die Nutzer-Schnittstelle (D/ME-UI) umfasst, an der die Nutzer-Kommandos eingegeben werden, und die ARA-Konfigurations-Applikation (ARA-Config-App) umfasst.

10. Verfahren zur Verwaltung eines Secure Element (SE/SIM) nach einem der Ansprüche 1 bis 8,
- das Secure Element (SE/SIM) umfassend eine darin implementierte SE Applikation oder eingerichtet eine SE Applikation darin zu implementieren, und weiter umfassend:
- eine SE-Endgerät-Schnittstelle zu einem Endgerät (DEV/ME), in Verbindung mit dem das Secure Element (SE/SIM) betrieben werden kann;
- eine ARA-Applikation (ARA-X/M/C) und ARA-Zugriffsregeln, durch welche Zugriffe von in dem Endgerät (DEV/ME) implementierten Applikationen über die SE-Endgerät-Schnittstelle auf in dem Secure Element (SE/SIM) implementierte oder implementierbare SE Applikationen geregelt sind;
**das Verfahren gekennzeichnet durch die Schritte:**
- an einer ARA-Nutzer-Schnittstelle (ARA-UI):
** Entgegennehmen eines Nutzer-Kommandos, das durch einen Nutzer an einer Nutzer-Schnittstelle (D/ME-UI; SE/SIM-UI) des Endgeräts (DEV/ME) oder des Secure Element (SE/SIM) eingegeben wird;
** Weiterleiten des entgegengenommenen Nutzer-Kommandos an die ARA-Applikation (ARA-X/M/C); und
** Veranlassen der ARA-Applikation (ARA-X/M/C), das weitergeleitete Nutzer-Kommando auf die ARA-Applikation (ARA-X/M/C) anzuwenden;
** durch die ARA-Applikation(ARA-X/M/C), in Reaktion auf das Veranlassen, Anwenden des Nutzer-Kommandos.

11. Verfahren nach Anspruch 10, wobei das Nutzer-Kommando darauf gerichtet ist, ARA-Zugriffsregeln zu verwalten, und wobei das Anwenden des Nutzer-Kommandos das Verwalten der ARA-Zugriffsregeln umfasst, wobei als das Verwalten eine oder mehrere der folgenden Verwaltungsmaßnahmen vorgesehen ist bzw. sind:
- Erzeugen einer neuen ARA-Zugriffsregel;
- Speichern einer neuen ARA-Zugriffsregel im Secure Element (SE/SIM);
- Löschen einer im Secure Element (SE/SIM) gespeicherten ARA-Zugriffsregel;
- Ändern einer im Secure Element (SE/SIM) gespeicherten ARA-Zugriffsregel.

12. Verfahren zum Verwalten einer Station nach Anspruch 8 oder 9, umfassend Verwalten des Secure Element (SE/SIM) mittels eines Verfahrens nach Anspruch 10 oder 11;
- weiter umfassend Herunterladen einer Target-Applikation in das Endgerät (DEV/ME);
- wobei das Verwalten der ARA-Zugriffsregeln umfasst:
** ein Erzeugen einer neuen ARA-Zugriffsregel für die Target-Applikation, durch welche insbesondere der Target-Applikation Zugriff auf SE Applikationen des Secure Element (SE/SIM) gemäß der erzeugten neuen ARA-Zugriffsregel erlaubt wird; und
** ein Speichern der erzeugten neuen ARA-Zugriffsregel im Secure Element (SE/SIM).

13. Verfahren nach Anspruch 12, weiter umfassend Registrieren oder/und Authentisieren der Target-Applikation gegenüber der ARA-Nutzer-Schnittstelle (ARA-UI) oder ggf. der ARA-Konfigurations-Applikation (ARA-Config-App), wobei das Verwalten umfasst:
- Verifizieren des Registrierung oder/und Authentisierung der Target-Applikation durch die ARA-Nutzer-Schnittstelle (ARA-UI) oder ggf. der ARA-Konfigurations-Applikation (ARA-Config-App),
- Erzeugen einer neuen ARA-Zugriffsregel für die Target-Applikation nur im Fall eines erfolgreichen Verifizierens der Registrierung oder/und Authentisierung.

## Claims

1. Secure element (SE/SIM) comprising an SE application implemented therein or configured to implement an SE application therein, and further comprising:
- an SE terminal interface to a terminal (DEV/ME), in conjunction with which the secure element (SE/SIM) can be operated;
- an ARA application (ARA-X/M/C) and ARA access rules, by means of which access operations from applications implemented in the terminal (DEV/ME) to SE applications implemented or able to be implemented in the secure element (SE/SIM) via the SE terminal interface are controlled;
**characterized by**:
- an ARA user interface (ARA-UI), which is configured:
** to receive user commands that are entered by a user on a user interface (D/ME-UI; SE/SIM-UI) provided on the terminal (DEV/ME) or on the secure element (SE/SIM);
** to forward received user commands to the ARA application (ARA-X/M/C); and
** to prompt the ARA application (ARA-X/M/C) to apply forwarded user commands to the ARA application (ARA-X/M/C).

2. Secure element (SE/SIM) according to Claim 1, wherein the user commands are designed to manage ARA access rules, and the application of the user command to the ARA application (ARA-X/M/C) comprises the management of the ARA access rules, wherein one or more of the following management measures is or are provided as the management:
- generating a new ARA access rule;
- storing a new ARA access rule in the secure element (SE/SIM) ;
- deleting an ARA access rule stored in the secure element (SE/SIM);
- changing an ARA access rule stored in the secure element (SE/SIM).

3. Secure element (SE/SIM) according to Claim 1 or 2, further configured:
- to receive the user commands from an ARA configuration application (ARA-Config-App) implemented in the terminal device (DEV/ME), which is or is able to be coupled between the user interface (D/ME-UI) and the ARA user interface (ARA-UI).

4. Secure element according to Claim 1 or 2, further comprising:
- an ARA configuration application (ARA-Config-App) which is or is able to be coupled between the user interface (SE/SIM-UI) and the ARA user interface (ARA-UI) and is configured to direct user commands to the ARA application (ARA-X/M/C).

5. Secure element (SE/SIM) according to any one of Claims 1 to 4, further comprising
- a timer, which is configured to cause user commands received at the ARA user interface (ARA-UI) to be applied to the ARA application (ARA-X/M/C) only during a limited time interval and no longer to be applied to the ARA application (ARA-X/M/C) after the time interval has expired.

6. Secure element (SE/SIM) according to Claim 5, wherein the timer is configured to be started by an elementary secure element command entered in the secure element (SE/SIM), in particular by a Card Toolkit command or SIM Toolkit command.

7. Secure element (SE/SIM) according to any one of Claims 1 to 6, designed as a subscriber identity module (SIM) for operation in conjunction with, as a terminal (DEV/ME), a mobile terminal (ME), wherein one or more of the following is or are provided as an SE application:
- a profile;
- an application associated with a profile;
- an application that is or is able to be implemented in the secure element independently of a profile.

8. Station comprising a secure element (SE/SIM) according to any one of Claims 1 to 7, and a terminal (DEV/ME), in particular a mobile terminal (ME).

9. Station according to Claim 8, in conjunction with Claim 4, wherein the terminal (DEV/ME) comprises the user interface (D/ME-UI), on which the user commands are entered, and which comprises the ARA configuration application (ARA-Config-App).

10. Method for managing a secure element (SE/SIM) according to any one of Claims 1 to 8,
- the secure element (SE/SIM) comprising an SE application implemented therein or configured to implement an SE application therein, and further comprising:
- an SE terminal interface to a terminal (DEV/ME), in conjunction with which the secure element (SE/SIM) can be operated;
- an ARA application (ARA-X/M/C) and ARA access rules, by means of which access operations from applications implemented in the terminal (DEV/ME) to SE applications implemented or able to be implemented in the secure element (SE/SIM) via the SE terminal interface are controlled;
the method being **characterized by** the steps:
- on an ARA user interface (ARA-UI):
** receiving a user command that is entered by a user on a user interface (D/ME-UI; SE/SIM-UI) of the terminal (DEV/ME) or the secure element (SE/SIM);
** forwarding the received user command to the ARA application (ARA-X/M/C); and
** prompting the ARA application (ARA-X/M/C) to apply the forwarded user command to the ARA application (ARA-X/M/C);
** applying the user command by means of the ARA application (ARA-X/M/C), in response to the prompting.

11. Method according to Claim 10, wherein the user command is designed to manage ARA access rules, and wherein the application of the user command comprises the management of the ARA access rules, wherein one or more of the following management measures is or are provided as the management:
- generating a new ARA access rule;
- storing a new ARA access rule in the secure element (SE/SIM);
- deleting an ARA access rule stored in the secure element (SE/SIM);
- changing an ARA access rule stored in the secure element (SE/SIM).

12. Method for managing a station according to Claim 8 or 9, comprising managing the secure element (SE/SIM) by means of a method according to Claim 10 or 11;
- further comprising downloading a target application to the terminal (DEV/ME);
- wherein managing the ARA access rules comprises:
** generating a new ARA access rule for the target application, by means of which the target application in particular is allowed access to SE applications of the secure element (SE/SIM) according to the generated new ARA access rule; and
** storing the generated new ARA access rule in the secure element (SE/SIM).

13. Method according to Claim 12, further comprising registering and/or authenticating the target application with respect to the ARA user interface (ARA-UI) or, if applicable, the ARA configuration application (ARA-Config-App), wherein the management comprises:
- verifying the registration and/or authentication of the target application by means of the ARA user interface (ARA-UI) or, if applicable, the ARA configuration application (ARA-Config-App),
- generating a new ARA access rule for the target application only if the registration and/or authentication is successfully verified.

## Revendications

1. Élément sécurisé (SE/SIM) comprenant une application SE implémentée en lui ou configuré pour implémenter une application SE en lui, et comprenant en outre :
- une interface de terminal SE vers un terminal (DEV/ME) en liaison avec lequel l'élément sécurisé (SE/SIM) est apte à être exploité ;
- une application ARA (ARA-X/M/C) et des règles d'accès ARA qui régissent l'accès des applications implémentées dans le terminal (DEV/ME) aux applications SE implémentées ou aptes à être implémentées dans l'élément sécurisé (SE/SIM) via l'interface de terminal SE ;
**caractérisé par** :
- une interface utilisateur ARA (ARA-UI) qui est configurée pour :
** recevoir des commandes utilisateur qui sont saisies par un utilisateur sur une interface utilisateur (D/ME-UI ; SE/SIM-UI) prévue sur le terminal (DEV/ME) ou sur l'élément sécurisé (SE/SIM) ;
** transmettre à l'application ARA (ARA-X/M/C) les commandes utilisateur reçues ; et
** amener l'application ARA (ARA-X/M/C) à appliquer les commandes utilisateur transmises à l'application ARA (ARA-X/M/C).

2. Élément sécurisé (SE/SIM) selon la revendication 1, dans lequel les commandes utilisateur sont destinées à gérer des règles d'accès ARA, et l'application de la commande utilisateur à l'application ARA (ARA-X/M/C) comprend la gestion des règles d'accès ARA, la gestion comprenant une ou plusieurs des mesures de gestion suivantes :
- création d'une nouvelle règle d'accès ARA ;
- enregistrement d'une nouvelle règle d'accès ARA dans l'élément sécurisé (SE/SIM) ;
- suppression d'une règle d' accès ARA enregistrée dans l'élément sécurisé (SE/SIM) ;
- modification d'une règle d'accès ARA enregistrée dans l'élément sécurisé (SE/SIM).

3. Élément sécurisé (SE/SIM) selon la revendication 1 ou la revendication 2, configuré en outre pour :
- réception des commandes utilisateur provenant d'une application de configuration ARA (ARA-Config-App), reliée ou apte à être reliée entre l'interface utilisateur (D/ME-UI) et l'interface utilisateur ARA (ARA-UI), et implémentée dans le terminal (DEV/ME).

4. Élément sécurisé selon la revendication 1 ou la revendication 2, comprenant en outre :
- une application de configuration ARA (ARA-Config-App) reliée ou apte à être reliée entre l'interface utilisateur (SE/SIM-UI) et l'interface utilisateur ARA (ARA-UI), qui est conçue pour transmettre les commandes utilisateur à l'application ARA (ARA-X/M/C).

5. Élément sécurisé (SE/SIM) selon l'une des revendications 1 à 4, comprenant en outre
- un minuteur qui est conçu pour faire en sorte que les commandes utilisateur reçues au niveau de l'interface utilisateur ARA (ARA-UI) ne soient appliquées à l'application ARA (ARA-X/M/C) que pendant un intervalle de temps limité et ne soient plus appliquées à l'application ARA (ARA-X/M/C) après expiration de l'intervalle de temps.

6. Élément sécurisé (SE/SIM) selon la revendication 5, dans lequel le minuteur est conçu pour être démarré par une commande élémentaire de l'élément sécurisé (SE/SIM) entrée dans l'élément sécurisé (SE/SIM), en particulier par une commande Card Toolkit ou SIM Toolkit.

7. Élément sécurisé (SE/SIM) selon l'une des revendications 1 à 6, conçu sous la forme d'un module d'identité d'abonné (SIM) destiné à fonctionner en association avec un terminal mobile (ME) en tant que terminal (DEV/ME), dans lequel sont prévues, en tant qu'application SE, un ou plusieurs parmi ce qui suit :
- un profil ;
- une application associée à un profil ;
- une application implémentée ou implémentable dans l'élément sécurisé indépendamment d'un profil.

8. Station comprenant un élément sécurisé (SE/SIM) selon l'une des revendications 1 à 7 et un terminal (DEV/ME), en particulier un terminal mobile (ME).

9. Station selon la revendication 8, en liaison avec la revendication 4, dans laquelle le terminal (DEV/ME) comprend l'interface utilisateur (D/ME-UI) sur laquelle sont entrées les commandes de l'utilisateur et comprend l'application de configuration ARA (ARA-Config-App).

10. Procédé de gestion d'un élément sécurisé (SE/SIM) selon l'une des revendications 1 à 8,
- l'élément sécurisé (SE/SIM) comprenant une application SE implémentée en lui ou étant configuré pour implémenter une application SE en lui, et comprenant en outre :
- une interface de terminal SE vers un terminal (DEV/ME) en liaison avec lequel l'élément sécurisé (SE/SIM) est apte à être exploité ;
- une application ARA (ARA-X/M/C) et des règles d'accès ARA qui régissent l'accès des applications implémentées dans le terminal (DEV/ME) aux applications SE implémentées ou aptes à être implémentées dans l'élément sécurisé (SE/SIM) via l'interface de terminal SE ;
le procédé étant **caractérisé par** les étapes suivantes :
- sur une interface utilisateur ARA (ARA-UI) :
** réception d'une commande utilisateur saisie par un utilisateur sur une interface utilisateur (D/ME-UI ; SE/SIM-UI) du terminal (DEV/ME) ou de l'élément sécurisé (SE/SIM) ;
** transmission de la commande utilisateur reçue à l'application ARA (ARA-X/M/C) ; et
** demande à l'application ARA (ARA-X/M/C) d'appliquer la commande utilisateur transmise à l'application ARA (ARA-X/M/C) ;
** par l'application ARA (ARA-X/M/C), en réponse à la demande, application de la commande utilisateur.

11. Procédé selon la revendication 10, dans lequel la commande utilisateur est destinée à gérer des règles d'accès ARA et dans lequel l'application de la commande utilisateur comprend la gestion des règles d'accès ARA, une ou plusieurs des mesures de gestion suivantes étant prévues en tant gestion :
- création d'une nouvelle règle d'accès ARA ;
- enregistrement d'une nouvelle règle d'accès ARA dans l'élément sécurisé (SE/SIM) ;
- suppression d'une règle d'accès ARA enregistrée dans l'élément sécurisé (SE/SIM) ;
- modification d'une règle d'accès ARA enregistrée dans l'élément sécurisé (SE/SIM).

12. Procédé de gestion d'une station selon la revendication 8 ou la revendication 9, comprenant la gestion de l'élément sécurisé (SE/SIM) au moyen d'un procédé selon la revendication 10 ou la revendication 11 ;
- comprenant en outre le téléchargement d'une application cible dans le terminal (DEV/ME) ;
- la gestion des règles d'accès ARA comprenant :
** la création d'une nouvelle règle d'accès ARA pour l'application cible, qui permet notamment à l'application cible d'accéder aux applications SE de l'élément sécurisé (SE/SIM) conformément à la nouvelle règle d'accès ARA créée ; et
** l'enregistrement de la nouvelle règle d'accès ARA créée dans l'élément sécurisé (SE/SIM).

13. Procédé selon la revendication 12, comprenant en outre l'enregistrement et/ou l'authentification de l'application cible auprès de l'interface utilisateur ARA (ARA-UI) ou, le cas échéant, de l'application de configuration ARA (ARA-Config-App), la gestion comprenant :
- la vérification de l'enregistrement et/ou de l'authentification de l'application cible par l'interface utilisateur ARA (ARA-UI) ou, le cas échéant, par l'application de configuration ARA (ARA-Config-App),
- la création d'une nouvelle règle d'accès ARA pour l'application cible uniquement en cas de vérification réussie de l'enregistrement et/ou de l'authentification.
